# EUROPÄISCHE PATENTSCHRIFT

(11) **EP 1 454 739 B1**
(45) Veröffentlichungstag und Bekanntmachung des Hinweises auf die Patenterteilung: **10.10.2007**
(21) Anmeldenummer: 04005402.5
(22) Anmeldetag: 08.03.2004
(51) Int. Cl.: B32B 25/12, B32B 1/08, H01B 3/28, F16L 11/08

(54) **Mehrlagiger Schlauch für Hochstromkabel mit Wasserkühlung**
Multilayer hose for high current cable with water cooling
Tuyau flexible multicouche pour cable à courant élevé avec refroidissement par eau

(30) Priorität: 07.03.2003 DE 10309972
(43) Veröffentlichungstag der Anmeldung: 08.09.2004
(73) Patentinhaber: Dung, Arndt, 58093 Hagen (DE)
(72) Erfinder: Dung, Arndt, 58093 Hagen (DE)
(74) Vertreter: Henfling, Fritz

(56) Entgegenhaltungen:
- EP-A- 1 195 549
- DE-A1- 3 309 176

## Beschreibung

Die Erfindung betrifft einen mehrlagigen Schlauch für Hochstromkabel mit Wasserkühlung und integrierter Überwachung des wasserführenden Schlauches.

Die für die Energieversorgung der Elektroden von Elektroöfen zum Einsatz kommenden, sich zwischen einem stationären Anschluss und dem heb- und senkbaren Elektrodentragarm erstreckenden Hochstromkabel bedürfen der Wasserkühlung. Der Wasserführung dient ein das Hochstromkabel umgebender, in der Regel mehrlagiger Schlauch. Ein solcher typischer Schlauch besteht aus einem das Hochstromkabel umgebenden Innenmantel aus Gummi, der von mindesten einem Druckträger, in der Regel aus Wickelcord, umgeben ist, dieser wiederum von einem Außenmantel auch wieder aus Gummi. Vorgesehen sein kann für den Schutz gegen Wärmestrahlung dann auch noch eine den Außenmantel umgebende Hülle aus einem Glasfasergewebe.

Beansprucht wird ein solcher Schlauch in erster Linie auf Streckung, Biegung und Verwindung. Bei längerem Einsatz stellen sich darauf zurückzuführende Ermüdungserscheinungen der Bestandteil des Schlauchs bildenden Materialen ein. Betroffen ist davon insbesondere der Außenmantel aus Gummi zumal unter der Einwirkung der hohen Betriebstemperaturen. Der Außenmantel ist dann auch fortschreitendem Abrieb unterworfen.

Eine Kontrolle eines solchen Schlauches auf anhaltende Einsatztauglichkeit ist praktisch nicht möglich. Nach längerem Einsatz wird der Schlauch bzw. das Gesamt-Ensemble Schlauch - Hochstromkabel deshalb durch ein neues Ensemble ersetzt. Das läuft darauf hinaus, dass vielfach an sich noch einsatzfähige Ensembles ausgewechselt werden, geschieht das nicht, wird das Risiko eines kostenträchtigen Störfalles in Kauf genommen.

Vor diesem Hintergrund liegt der Erfindung die Aufgabe zugrunde, eine Lösung anzubieten, die unter Ausschluss das Risikos eines Störfalles den Einsatz von wassergekühl ten Hochstromkabeln bis zum Offenkundigwerden nicht mehr in Kauf zu nehmenden Verschleißes ermöglicht.

Die Aufgabe wird erfindungsgemäß mit einem mehrlagigen Schlauch für Hochstromkabel mit Wasserkühlung, bestehend aus
einem das HS-Kabel umgebenden und der Wasserführung dienenden Innenmantel aus Gummi bzw. einem Gummi-Ersatzstoff,
mindestens einem den Innenmantel umgebenden Druckträger,
einem sich über die Länge des Schlauches erstreckenden, den/die Druckträger umgebenden als Spirale ausgelegten elektrischen Leiter
mit einem Zu- und einem Abgang am anschlussseitigen Ende des Schlauches und einem das Ensemble umgebenden Gummimantel,
gelöst. Ausgestaltungen des erfindungsgemäßen Schlauches ergeben sich aus den Untersprüchen 2 bis 7. In den Unteransprüchen 8 bis 11 ist das mit dem erfindungsgemäßen Schlauch realisierbare Überwachungssystem angesprochen.

Der dem Schlauch für Hochstromkabel mit Wasserkühlung zugeordnete, auf dem Bestandteil des Schlauches bildenden Druckträger angeordnete elektrische Leiter, der an einen in der Regel ofenfemen Detektor angeschlossen wird, führt bei fortschreitendem Verschleiß bzw. fortschreitenden Ermüdungserscheinungen des Schlauches eintretenden Bruch des Leiters zur Anzeige des aktuellen Schlauchzustandes, d.h. das Bedienungspersonal erhält zu gegebener Zeit den Hinweis auf das Erfordernis des Auswechselns des Schlauches bzw. des Ensembles Hochstromkabel - Schlauch unter Ausnutzung der vollen Dauer der Einsatzfähigkeit des Ensembles.

Auch wenn einer Kupferdrahtspirale der Vorzug zu geben ist, schließt das sie Verwendung von Aluminium für den elektrischen Leiter nicht aus.

Das System zur Überwachung der Betriebstauglichkeit eines Hochstromkabels mit Wasserkühlung sollte tunlichst nur zwischen aufeinanderfolgenden Schmelzphasen aktiviert sein, da die sich während der Schmelzphasen einstellenden starken magnetischen Felder sich verfälschend auf das System auswirken.

In der Zeichnung ist die Erfindung anhand einer Schema-Darstellung der Erfindung weitergehend erläutert. Es zeigen:
- Figur 1: eine Querschnitt durch den Schlauch mit ihm erfindungsgemäß zugeordnetem elektrischen Leiter,
- Figur 2: den Ausschnitt II in Figur 1, in größerem Maßstab,
- Figur 3: den Schlauch in Ansicht, einen Ends schichtweise fortschreitend aufgebrochen.

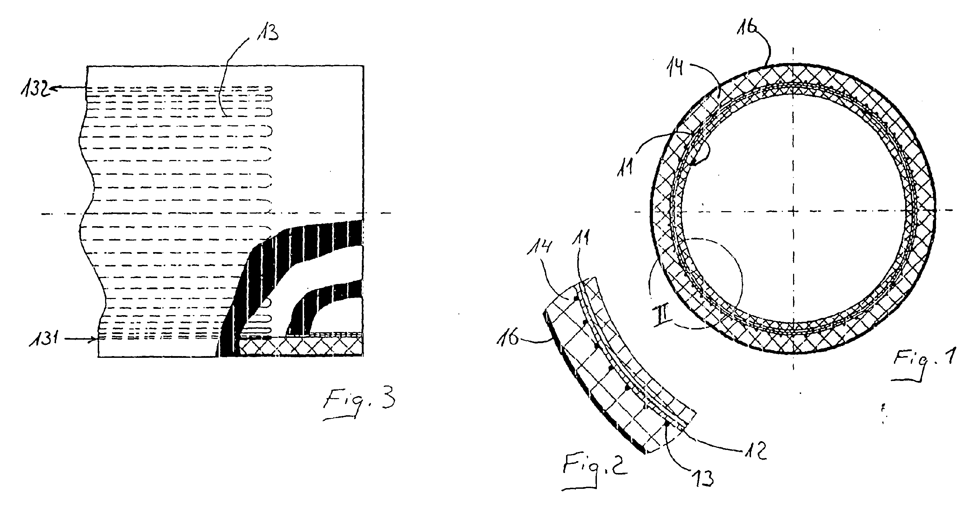

Wie das insbesondere aus Figur 1 zu entnehmen ist, besteht der das nicht dargestellte Hochstromkabel umgebende Kühlwasserschlauch aus dem Innenmantel 11 aus Gummi oder einem Gummiersatzstoff, dem den Innenmantel umgebenden Druckträger 12 (Figur 2), dem sich über die Länge des Schlauches erstreckenden, der den Druckträger 12 umgebenden elektrisch leitenden Spirale 13 (Figur 2), die einen Ends des Schlauches über Anschlüsse 131, 132 (Figur 3) an das Überwachungssystem angeschlossen wird, und dem die Spirale 13 umgebenden, stärker ausgelegten Gummimantel 14, der beim Ausführungsbeispiel von Glasfasergewebe 16 umgeben ist.

Bei fortschreitender Ermüdung, gegebenenfalls dann auch Verschleiß des äußeren Gummimantels 14, kommt es zu Bruch des in den Schlauch eingebetteten elektrischen Leiters 13 oder aber zu Kurzschluss, worauf ein an den elektrischen Leiter 13 angeschlossener (131, 132) Detektor anspricht, über den ein Signal ausgelöst wird, das dem Bedienungspersonal des Schmelzaggregats den Hinweis vermittelt, dass das Wechseln des Schlauches erforderlich wird.

## Patentansprüche

1. Mehrlagiger Schlauch für die Energieversorgung der Elektroden von Elektroöfen dienenden Hochstromkabeln mit Wasserkühlung und integrierter Überwachung des wasserführenden Schlauches, bestehend aus
einem das HS-Kabel umgebenden und der Wasserführung dienenden Innenmantel (11) aus Gummi bzw. einem Gummi-Ersatzstoff,
mindestens einem den Innenmantel (11) umgebenden Druckträger (12),
einem sich über die Länge des Schlauches erstreckenden, den/die Druckträger (12) umgebenden, als Spirale ausgelegten elektrischen Leiter (13)
mit einem Zu- (131) und einem Abgang (132) am anschlußseitigen Ende des Schlauches
und einem das Ensemble umgebenden Gummimantel (14).

2. Mehrlagiger Schlauch nach Anspruch 1, **gekennzeichnet durch** zwei den Innenmantel umgebende Druckträger (12).

3. Mehrlagiger Schlauch nach Anspruch 1 oder Anspruch 2, **dadurch gekennzeichnet, dass** der Druckträger (12) aus einem Cord-Gewebe besteht.

4. Mehrlagiger Schlauch nach Anspruch 3, **gekennzeichnet durch** Wickelcord als Druckträger (12).

5. Mehrlagiger Schlauch nach einem der Ansprüche 1 bis 4, **dadurch gekennzeichnet, dass** der elektrische Leiter (13) eine Kupferdrahtspirale ist.

6. Mehrlagiger Schlauch nach einem der Ansprüche 1 bis 5, **dadurch gekennzeichnet, dass** der Außenmantel (14) stärker ausgelegt ist als der Innenmantel (11).

7. Mehrlagiger Schlauch nach einem der Ansprüche 1 bis 6, **dadurch gekennzeichnet, dass** der Außenmantel (14) von einem Glasfasergewebe umgeben ist (16).

8. System zur Überwachung der Betriebstauglichkeit eines Hochstromkabels mit Wasserkühlung für die Energieversorgung der Elektroden von Elektroöfen unter Einsatz eines Schlauches nach einem der Ansprüche 1 bis 7, **gekennzeichnet durch** einen an die zugangsseitigen Anschlüsse (131, 132) des Bestandteil des Schlauches bildenden elektrischen Leiters (13) gelegten, bei Bruch des Leiters ansprechenden eigenständigen Detektor.

9. System nach Anspruch 8, **gekennzeichnet durch** einen ein elektrisches, optisches und/oder akustisches Signal auslösenden Detektor.

10. System nach Anspruch 8 oder Anspruch 9, **gekennzeichnet durch** die ofenferne Installierung des Detektors.

11. System nach einem der Ansprüche 8 bis 10, **gekennzeichnet durch** einen in das System integrierten, die Energieeinspeisung während der Schmelzphase bei Bruch des elektrischen Leiters unterbrechenden Schalter.

## Claims

1. Multi-layered hose for heavy-current cables, which serve to supply energy to the electrodes of electric furnaces and have water cooling and a means for monitoring the water-conducting hose incorporated therein, said hose comprising:
an internal casing (11), formed from rubber or respectively a rubber substitute, which surrounds the heavy-current cable and serves to conduct water,
at least one pressure support (12), surrounding the internal casing (11),
an electrical conductor (13), designed as a coil, which surrounds the pressure support or supports (12) and extends over the length of the hose,
which conductor has an inlet (131) and an outlet (132) at the end of the hose on the connection side,
and a rubber casing (14), surrounding the assembly.

2. Multi-layered hose according to claim 1, **characterised by** two pressure supports (12) surrounding the internal casing.

3. Multi-layered hose according to claim 1 or claim 2, **characterised in that** the pressure support (12) is formed from a cord fabric.

4. Multi-layered hose according to claim 3, **characterised by** twisted cord being used as the pressure support (12).

5. Multi-layered hose according to one of claims 1 to 4, **characterised in that** the electrical conductor (13) is a copper wire coil.

6. Multi-layered hose according to one of claims 1 to 5, **characterised in that** the external casing (14) is thicker than the internal casing (11).

7. Multi-layered hose according to one of claims 1 to 6, **characterised in that** the external casing (14) is surrounded by a glass fibre fabric (16).

8. System for monitoring the operational suitability of a heavy-current cable with water cooling, for supplying energy to the electrodes of electric furnaces, by using a hose according to one of claims 1 to 7, **characterised by** an independent detector, which is placed upon the connections (131, 132) on the inlet side of the electrical conductor (13), forming a component part of the hose, and which responds in the event of a fracture of the conductor.

9. System according to claim 8, **characterised by** a detector which releases an electrical, visual and/or acoustic signal.

10. System according to claim 8 or claim 9, **characterised by** the installation of the detector remote from the furnace.

11. System according to one of claims 8 to 10, **characterised by** a switch, which is incorporated in the system and interrupts the supply of energy during the smelting phase in the event of a fracture of the electrical conductor.

## Revendications

1. Tuyau multicouches pour les câbles courant fort destinés à l'alimentation en énergie d'électrodes de fours électriques, avec refroidissement par eau et surveillance intégrée du tuyau conducteur d'eau, comprenant
une enveloppe intérieure (11) en caoutchouc ou en substitut de caoutchouc, entourant le câble courant fort et servant à la conduite de l'eau,
au moins une enveloppe résistant à la pression (12) entourant l'enveloppe intérieure (11),
un conducteur électrique (13) conçu en spirale, s'étendant sur la longueur du tuyau flexible, entourant la/les enveloppes résistant à la pression (12),
avec une entrée (131) et une sortie (132) à l'extrémité du raccord du tuyau
et une enveloppe en caoutchouc (14) entourant l'ensemble.

2. Tuyau multicouches, selon la revendication 1, **caractérisé en** deux enveloppes résistant à la pression (12) entourant l'enveloppe intérieure.

3. Tuyau multicouches, selon l'une quelconque des revendications 1 ou 2, **caractérisé en ce que** l'enveloppe résistant à la pression (12) est constituée d'un cordon tissé.

4. Tuyau multicouches, selon la revendication 3, **caractérisé en** un cordon spiralé servant d'enveloppe résistant à la pression (12).

5. Tuyau multicouches, selon l'une quelconque des revendications 1 à 4, **caractérisé en ce que** le conducteur électrique (13) est un fil de cuivre spiralé.

6. Tuyau multicouches, selon l'une quelconque des revendications 1 à 5, **caractérisé en ce que** l'enveloppe extérieure (14) est conçue plus résistante que l'enveloppe intérieure (11).

7. Tuyau multicouches, selon l'une quelconque des revendications 1 à 6, **caractérisé en ce que** l'enveloppe extérieure (14) est entourée d'un tissu en fibre de verres (16).

8. Système de surveillance de l'aptitude au fonctionnement d'un câble courant fort avec refroidissement par eau pour l'alimentation en énergie de fours électriques, par la mise en oeuvre d'un tuyau selon l'une quelconque des revendication 1 à 7, **caractérisé en** un détecteur autonome, étant adressé en cas de rupture du conducteur et qui est relié aux raccords côté entrée (131, 132) du conducteur électrique (13) formant un élément constitutif du tuyau.

9. Système selon la revendication 8, **caractérisé en** un détecteur déclenchant un signal électrique, optique et/ ou acoustique.

10. Système selon l'une quelconque des revendications 8 ou 9, **caractérisé en** une installation du détecteur distance du four.

11. Système selon l'une quelconque des revendications 8 à 10, **caractérisé en** un interrupteur intégré dans le système, coupant l'alimentation en énergie pendant la phase de fusion en cas de rupture du conducteur électrique.
